# EUROPEAN PATENT APPLICATION

(11) **EP 4 554 247 A1**
(43) Date of publication of application: **14.05.2025**
(21) Application number: 24206098.6
(22) Date of filing: 11.10.2024
(51) Int. Cl.: H04N 23/66, H04N 23/67, G03B 17/14

(54) **IMAGE PICKUP APPARATUS, ACCESSORY APPARATUS, CONTROL METHOD, AND PROGRAM**

(30) Priority: 08.11.2023 JP 2023190471
(71) Applicant: CANON KABUSHIKI KAISHA, Tokyo 146-8501 (JP)
(72) Inventor: SUGITA, Atsushi, Tokyo, 146-8501 (JP)
(74) Representative: TBK

(57) **Abstract**

An image pickup apparatus (200) is attachable to and detachable from at least one accessory apparatus (100), and includes a camera communication unit (202) communicable with the accessory apparatus, and a camera control unit (201) configured to receive from the accessory apparatus via the camera communication unit, first initial setting information on an initial setting of a first function for driving a focus lens to a first focus position that has been previously set, a camera control unit having a second function for requesting, via the camera control unit, the accessory apparatus to drive the focus lens to a second focus position that has been previously set, and set second initial setting information on an initial setting of the second function based on the first initial setting information so that the second initial setting information is at least partially different from the first initial setting information.

## Description

### BACKGROUND

### Technical Field

The disclosure relates to an image pickup apparatus, an accessory apparatus, a control method, and a program.

### Description of Related Art

An image pickup apparatus or accessory apparatus having a focus preset (FP) function has conventionally been known. Japanese Patent Laid-Open No. 2001-255446 discloses an optical apparatus that prevents an initial FP position from moving to a position that is not intended by a user by setting a position when power is turned on to the initial FP position. Japanese Patent Laid-Open No. 2020-003583 discloses an optical apparatus that can register two FP positions, and discloses an embodiment that sets a focus position at a moving end on a close distance side (a close distance end) and a focus position at a moving end on an infinity side (infinity end) to initial FP positions.

Each of Japanese Patent Laid-Open Nos. 2001-255446 and 2020-003583 is silent about a configuration in which both an image pickup apparatus and an accessory apparatus have FP functions, or a proper initial setting of the FP function in this configuration. Thus, the user is to change the setting to a desired setting, and is likely to miss an imaging (or photo) opportunity.

### SUMMARY

The present invention in its first aspect provides an image pickup apparatus as specified in claims 1 to 12.

The present invention in its second aspect provides an accessory apparatus as specified in claims 13 and 33.

The present invention in its third aspect provides a control method as specified in claims 34 and 35.

The present invention in its fourth aspect provides a program as specified in claim 36.

Further features of various embodiments of the disclosure will become apparent from the following description of embodiments with reference to the attached drawings.

### BRIEF DESCRIPTION OF THE DRAWINGS

FIG. 1 is a block diagram of an imaging system according to Example 1.
FIG. 2 is a flowchart illustrating processing of an FP function in an accessory apparatus according to Example 1.
FIG. 3 explains an initial setting of the FP function in the accessory apparatus according to Example 1.
FIG. 4 is a flowchart illustrating processing of the FP function in the image pickup apparatus according to Example 1.
FIG. 5 explains an initial setting of the FP function in the image pickup apparatus according to Example 1.
FIG. 6 is a table illustrating combinations of initial settings for the FP position in the imaging system according to Example 1.
FIG. 7 explains the initial setting in a case where both the accessory apparatus and the image pickup apparatus according to Example 1 have FP functions.
FIG. 8 explains the sequence of the FP function in the imaging system according to Example 1.
FIGs. 9A and 9B are tables illustrating combinations of initial settings for an FP speed in an imaging system according to Example 2.

### DETAILED DESCRIPTION

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of examples according to the disclosure.

### EXAMPLE 1

Example 1 according to the present disclosure relates to an imaging system (lens interchangeable type camera system) that includes an image pickup apparatus and an accessory apparatus, both of which can have focus preset (FP) functions, and changes the setting of each initial FP position in the combination of the image pickup apparatus and the accessory apparatus. By using the FP function, the user can move a focus lens position to an arbitrary position at an arbitrary timing. The FP function has a focus preset drive (FP drive) function that drives the focus lens position to a predetermined position (FP position) and a focus preset registration (FP registration) function that sets the FP position to a position desired by the user. In a case where FP drive is performed without FP registration, the focus lens is driven to a predetermined initial position (initial FP position).

### CONFIGURATION OF IMAGING SYSTEM

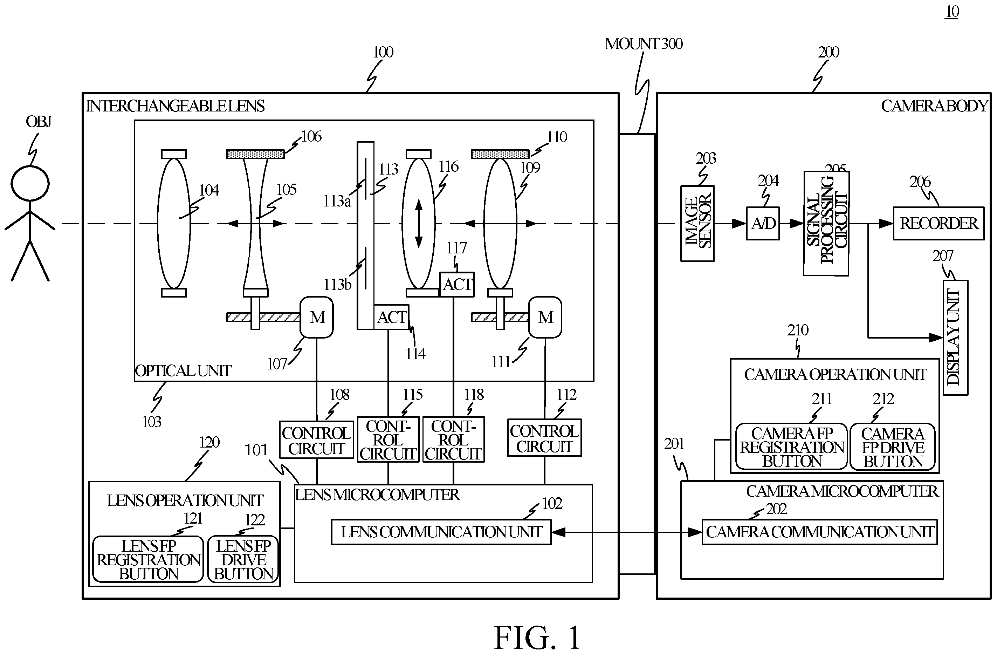

Referring to FIG. 1, a description will be given of an imaging system (lens interchangeable type camera system) 10 according to this example. FIG. 1 is a block diagram of the imaging system 10. The imaging system 10 includes a camera body (image pickup apparatus) 200, and an interchangeable lens (accessory apparatus) 100 that is attachable to and detachable from the camera body 200.

The interchangeable lens 100 and the camera body 200 can be mechanically and electrically connected via a mount 300 as a connection mechanism. The mount 300 in FIG. 1 schematically illustrates a state in which the mount of the interchangeable lens 100 and the mount of the camera body 200 are connected, and these mounts are attachable to and detachable from each other.

The mount surfaces of the mounts of the interchangeable lens 100 and the camera body 200 are provided with communication terminals (not illustrated). In a case where they are connected via the mount 300, the corresponding communication terminals come into contact with each other, and the interchangeable lens 100 and the camera body 200 can communicate via the communication terminals. Power is supplied to the interchangeable lens 100 from the camera body 200 via a power terminal (not illustrated) provided to the mount 300, and operates various actuators (described later) and a lens microcomputer (lens control unit, accessory control unit) 101.

The interchangeable lens 100 includes an optical unit 103 having an imaging optical system. The optical unit 103 (imaging optical system) includes, in order from an object OBJ side, a field lens 104, a zoom lens 105 that performs magnification variation, an aperture unit 113 that adjusts a light amount, an image stabilizing lens 116 that reduces (corrects) image blur, and a focus lens 109 that provides focusing.

The zoom lens 105 and the focus lens 109 are held by lens holding frames 106 and 110, respectively. The lens holding frames 106 and 110 are guided by unillustrated guide shafts movably in a direction along the optical axis (optical axis direction) indicated by a dashed line, and can be driven in the optical axis direction by actuators 107 and 111. The aperture unit 113 has an aperture stop with aperture blades 113a and 113b, and can be driven by an aperture actuator 114. The image stabilizing lens 116 can be driven in a direction orthogonal to the optical axis direction by an image stabilizing actuator 117.

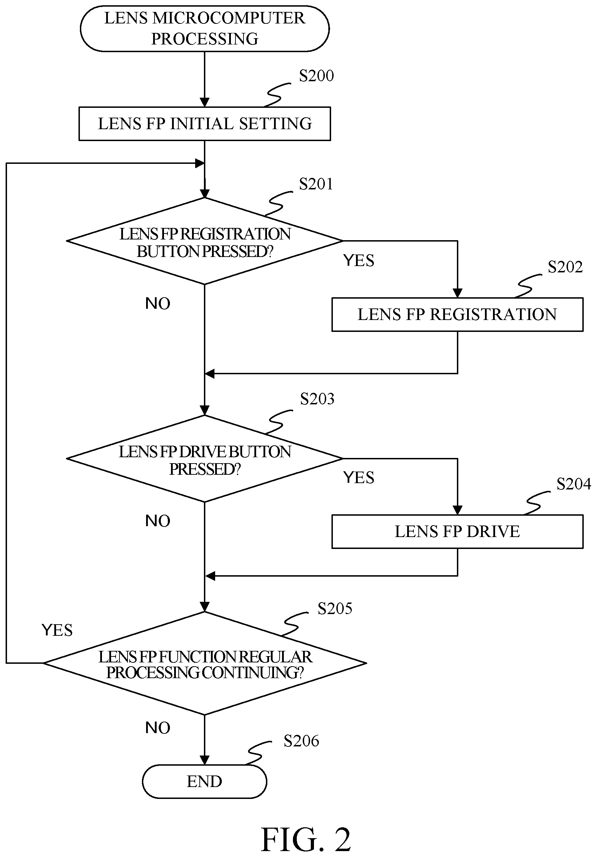

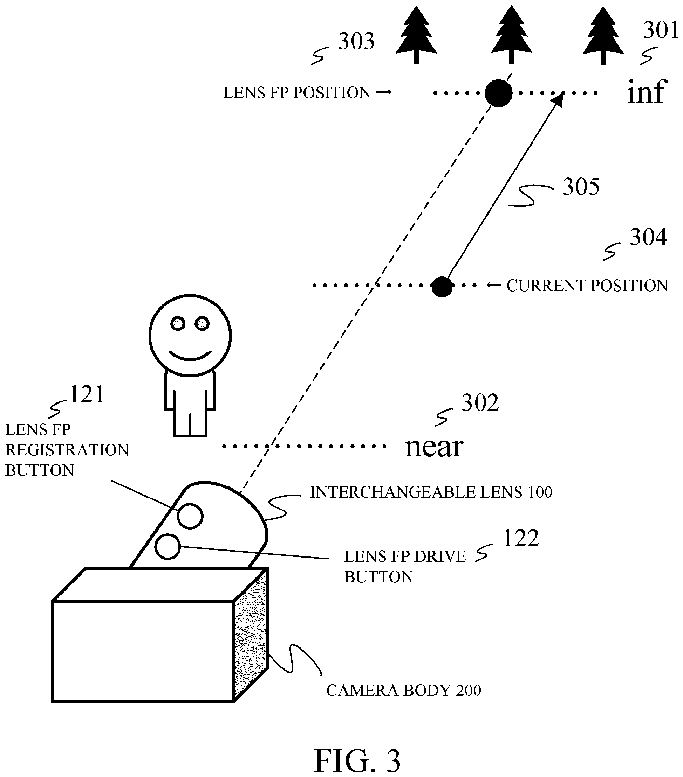

The interchangeable lens 100 further includes a lens operation unit 120 operable by the user. The lens operation unit 120 includes a lens FP registration button 121, and a lens FP drive button 122. Details of the lens FP registration button 121 and the lens FP drive button 122 will be given later with reference to FIGs. 2 and 3. The configuration of the lens operation unit 120 is not limited to this example, and can be changed as necessary according to the functions installed in the interchangeable lens 100. The lens operation unit 120 may have, for example, a manual operation ring (a so-called electronic ring) that can be rotated by the user, or an autofocus (AF)/manual focus (MF) switch.

The interchangeable lens 100 also has the lens microcomputer 101. The lens microcomputer 101 can communicate with the camera body 200 via a lens communication unit (lens communication unit, accessory communication unit) 102. The lens microcomputer 101 can control drive of the optical unit 103 and acquire its status via control circuits 108, 112, 115, and 118. The lens microcomputer 101 controls the operation of each component in the interchangeable lens 100 based on the state of the optical unit 103, the operation of the lens operation unit 120, or commands from the lens communication unit 102.

For example, the lens microcomputer 101 controls the drive of the focus lens 109 by setting the number of drive pulses (unit: pulse) and the drive speed (unit: pulse/sec = pps) to the control circuit 112, as necessary. The lens microcomputer 101 acquires the current position (unit: pulse) of the focus lens 109 via the control circuit 112, as necessary.

The camera body 200 includes an image sensor 203, an A/D conversion circuit 204, a signal processing circuit 205, a recorder 206, a camera microcomputer 201, a display unit 207, and a camera operation unit 210.

The image sensor 203 is a Charge Coupled Device (CCD) sensor, a Complementary Metal-Oxide-Semiconductor (CMOS) sensor, or the like. The image sensor 203 performs photoelectric conversion for an object image formed by the imaging optical system in the interchangeable lens 100, and outputs an electrical signal (analog signal). The A/D conversion circuit 204 converts the analog signal from the image sensor 203 into a digital signal. The signal processing circuit 205 performs various image processing for the digital signal from the A/D conversion circuit 204 to generate a video signal. The signal processing circuit 205 also generates focus information indicating a contrast state of the object image (a focus state of the imaging optical system) and luminance information indicating an exposure state from the video signal. The signal processing circuit 205 outputs the video signal to the display unit 207, and the display unit 207 displays the video signal as a live-view image that is used to confirm the composition, focus state, etc.

The camera microcomputer (camera control unit) 201 controls the camera body 200 according to input from a camera operation unit 210, such as an imaging instruction switch and various setting switches. The camera microcomputer 201 can receive, from the interchangeable lens 100 via the camera communication unit 202, accessory FP initial setting information (first initial setting information) on the initial setting for driving the focus lens 109 to a first focus position that has been previously set. The camera microcomputer 201 also has a camera FP function (second function) which can request the interchangeable lens 100 to drive the focus lens 109 to a second focus position that has been previously set via the camera communication unit 202. The camera microcomputer 201 sets camera FP initial setting information (second initial setting information) on the initial setting of the camera FP function based on the accessory FP initial setting information so that the information is at least partially different from the accessory FP initial setting information (first initial setting information).

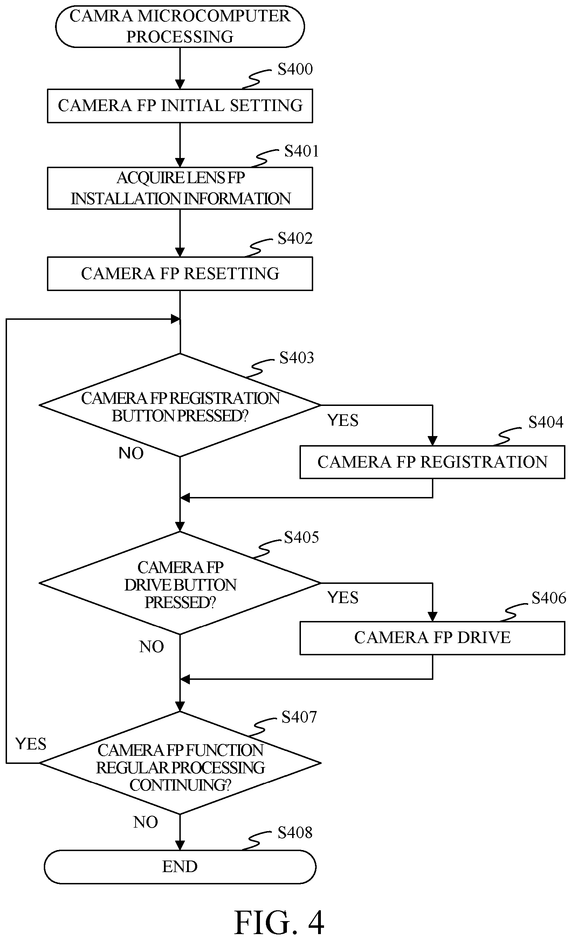

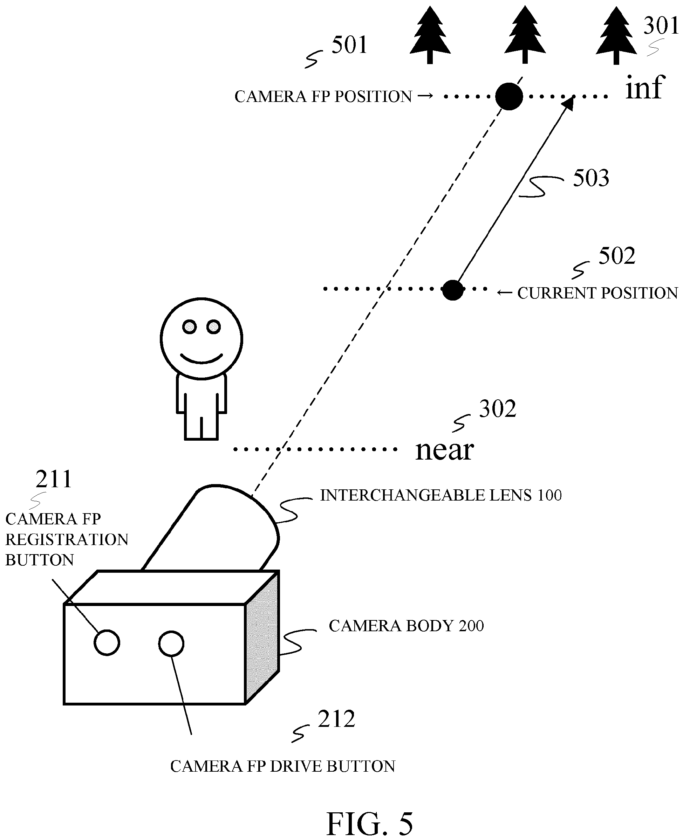

The camera operation unit 210 according to this example is an operation unit which can be operated by the user, and includes a camera FP registration button 211 and a camera FP drive button 212. The details of the camera FP registration button 211 and the camera FP drive button 212 will be described later with reference to FIGs. 4 and 5.

The camera microcomputer 201 transmits control commands and transmission request commands to the interchangeable lens 100 as necessary via the camera communication unit 202, and receives lens data from the interchangeable lens 100. For example, the camera microcomputer 201 transmits a focus drive request command for transmitting the number of drive pulses (unit: pulse) and a drive speed (unit: pulse/sec=pps) to the interchangeable lens 100 according to focus information and input from the camera operation unit 210. Thereby, the camera microcomputer 201 can control the focus lens 109. The camera microcomputer 201 transmits a transmitting request command of focus position information to the interchangeable lens 100 as necessary to obtain lens position information including a current position (unit: pulse) of the focus lens 109. The camera microcomputer 201 also receives lens position information from the interchangeable lens 100.

### ACCESSORY APPARATUS WITH FP FUNCTION

A description will now be given of an interchangeable lens (accessory apparatus) 100 with FP function according to this example. The interchangeable lens 100 includes a lens operation unit 120 as a member for a user to operate the FP function (lens FP function, accessory FP function, first function) installed in the interchangeable lens 100. The lens FP function is a function to drive the focus lens 109 to a first focus position that has been previously set.

The lens operation unit 120 includes a lens FP registration button 121 for FP registration and a lens FP drive button 122 for instructing the start of FP drive. The member for operating the lens FP function is not limited to this example. For example, FP drive may be started by operating an arbitrary ring (not illustrated) of the interchangeable lens 100.

Referring to FIG. 2, a description will be given of processing of the lens FP function of the interchangeable lens 100 according to this example. FIG. 2 is a flowchart illustrating the processing of the lens FP function. This flow starts according to the startup of the lens microcomputer 101.

First, in step S200, the lens microcomputer 101 executes settings (lens FP settings) initializing processing for control of the lens FP function. This example sets an initial setting (lens initial FP position, accessory initial FP position, first initial position information) of the FP position (lens FP position), which is one of the lens FP settings, to a position at an infinity end of the focus lens 109 (information indicating the infinity end). This example also sets an initial setting (lens initial FP speed, accessory initial FP speed, first initial speed information) of a drive speed (lens FP speed), which is one of the lens FP settings, to a maximum speed at which the focus lens 109 can be driven (maximum focus drive speed).

The lens FP settings and setting contents to be initialized are not limited to this example. For example, the lens initial FP position may be set to a position of a close distance end, or the lens initial FP speed may be set to a limit speed based on the noise influence on a moving image. In a case where the lens FP drive speed is determined by an operation angle of the arbitrary ring, the maximum lens FP speed may be set. The lens FP settings are stored in a memory (not illustrated) of the interchangeable lens 100 by the lens microcomputer 101. In a case where the memory is a nonvolatile memory that can retain its memory even after power to the interchangeable lens 100 is turned off, data stored in the nonvolatile memory may be initially set as the lens FP settings in this step. Once the initializing processing in this step is completed, the flow proceeds to step S201 to start regular processing of the lens FP function.

In step S201, the lens microcomputer 101 determines whether or not the lens FP registration button 121 has been pressed. In a case where it is determined that the lens FP registration button 121 has been pressed, the flow proceeds to step S202. On the other hand, in a case where it is determined that the lens FP registration button 121 has not been pressed, the flow proceeds to step S203. In step S202, the lens microcomputer 101 sets the current focus lens position that can be obtained via the control circuit 108, as the lens FP position, and the flow proceeds to step S203.

In step S203, the lens microcomputer 101 determines whether or not the lens FP drive button 122 has been pressed. In a case where it is determined that the lens FP drive button 122 has been pressed, the flow proceeds to step S204. On the other hand, in a case where it is determined that the lens FP drive button 122 has not been pressed, the flow proceeds to step S205. In step S204, the lens microcomputer 101 drives the focus lens 109 via the control circuit 108 based on the lens FP position or lens FP speed, which is the lens FP setting, and the flow proceeds to step S205. As a variation of this example, for example, the FP drive may be started by operating an arbitrary ring (not illustrated) of the interchangeable lens 100. In this case, the lens microcomputer 101 may determine whether the ring has been operated in step S203, and determine the drive speed of the focus lens 109 based on the operation angle of the ring in step S204.

In step S205, the lens microcomputer 101 determines whether or not to continue the regular processing of the lens FP function. In a case where it is determined that the regular processing of the lens FP function is to be continued, the process returns to step S201. For example, in a case where the lens microcomputer 101 transitions to a sleep state based on a request from the camera microcomputer 201, the flow proceeds to step S206 and the flow ends in order to end the regular processing of the lens FP function. In a case where this flow ends and the lens FP position was set in step S202, the lens FP position may be stored in the nonvolatile memory so that the set lens FP position is initialized when the lens microcomputer 101 is started next time. Alternatively, the lens FP position may be stored in the nonvolatile memory when the lens FP position is set in step S202.

Referring to FIG. 3, a description will be given of the initial setting operation of the lens FP function of the interchangeable lens 100 according to this example. FIG. 3 explains the initial setting of the lens FP function. FIG. 3 illustrates that the focus lens 109 can move within a range from an infinity end (inf 301) to a close distance end (near 302), and that a lens FP position 303 has been initially set to inf 301 in step S200 of FIG. 2. The current position of the focus lens 109 is at a current position 304. Here, in a case where the user presses the lens FP drive button 122 without pressing the lens FP registration button 121, the processing of step S204 starts, and the focus lens 109 moves to the lens FP position 303, that is, to the initial setting inf 301 (305).

### IMAGE PICKUP APPARATUS WITH FP FUNCTION

A description will now be given of the camera body (image pickup apparatus) 200 with the FP function according to this example. The camera body 200 includes a camera operation unit 210 as a member for the user to operate the FP function (camera FP function, second function) of the camera body 200. The camera FP function is a function that can request the interchangeable lens (accessory apparatus) 100 to drive the focus lens 109 to a second focus position that has been previously set.

The camera operation unit 210 includes a camera FP registration button 211 for FP registration, and a camera FP drive button 212 for instructing the start of FP drive. The members for operating the camera FP function are not limited to this example. For example, the camera FP function may be operated by selecting a menu or user interface (UI) displayed on the display unit 207 of the camera body 200.

Referring now to FIG. 4, a description will be given of processing of the camera FP function of the camera body 200 according to this example. FIG. 4 is a flowchart illustrating the processing of the camera FP function. This flow starts according to the startup of the camera microcomputer 201.

First, in step S400, the camera microcomputer 201 performs processing to initialize settings (camera FP settings) for controlling the camera FP function. This example sets the initial setting (camera initial FP position, second initial position information) of the FP position (camera FP position), which is one of the camera FP settings, to the infinity end position (information indicating the infinity end) of the focus lens 109 of the interchangeable lens 100. In addition, this example sets the initial setting (camera initial FP speed, second initial speed information) of the drive speed (camera FP speed), which is one of the camera FP settings, to the maximum speed at which the focus lens 109 can be driven (maximum focus drive speed). The camera FP settings and the setting contents to be initialized are not limited to this example. For example, the camera initial FP position may be set to the position of the close distance end, or the camera FP speed may be set to a limit speed based on the noise influence on a moving image.

The camera FP settings are stored in a memory (not illustrated) of the camera body 200 by the camera microcomputer 201. In a case where the memory is nonvolatile and can retain its memory even after the power to the camera body 200 is cut off, the data stored in the memory may be initially set as the camera FP settings in this step. After the initializing processing of this step is completed, the flow proceeds to step S401 to start regular processing of the camera FP function.

In step S401, the camera microcomputer 201 acquires information about the FP function installed in the interchangeable lens 100 (lens FP installation information) from the lens microcomputer 101 via the camera communication unit 202, and the flow proceeds to step S402. The lens FP installation information includes information for the camera microcomputer 201 to determine whether or not the interchangeable lens 100 has an FP function, but is not limited to this example. For example, the lens FP installation information may include information on a lens initial FP position, information on the lens initial FP speed, or information on the current lens FP setting.

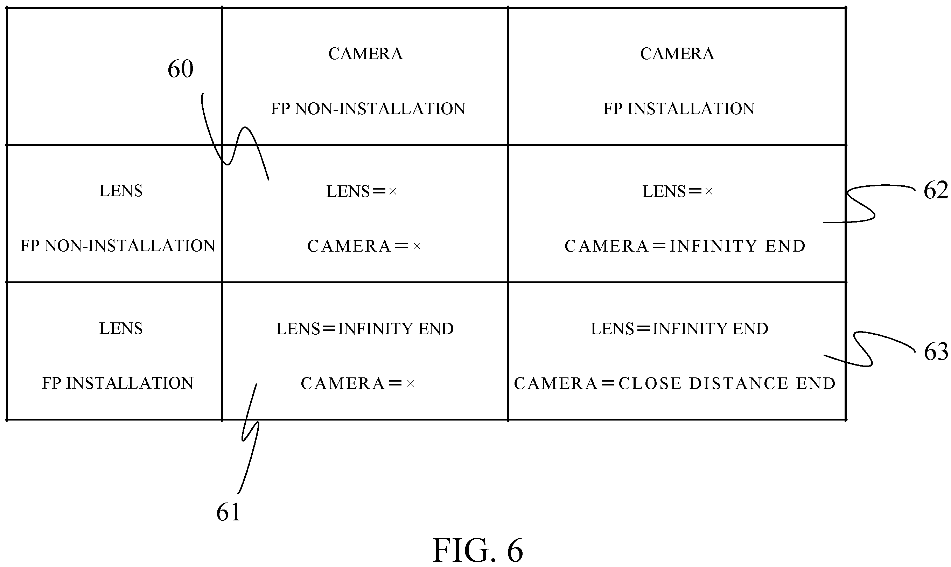

In step S402, the camera microcomputer 201 resets the camera FP setting set in step S400 based on the lens FP installation information acquired in step S401. A detailed description of the resetting will be given later with reference to FIG. 6. Up to this step is the initializing processing of the camera FP function, and after the initializing processing is completed, the flow proceeds to step S403 to start regular processing of the camera FP function.

In step S403, the camera microcomputer 201 determines whether or not the camera FP registration button 211 has been pressed. In a case where it is determined that the camera FP registration button 211 has been pressed, the flow proceeds to step S404. On the other hand, in a case where it is determined that the camera FP registration button 211 has not been pressed, the flow proceeds to step S405. In step S404, the camera microcomputer 201 acquires the current focus lens position of the focus lens 109 of the interchangeable lens 100 via the camera communication unit 202, sets the current focus lens position as the camera FP position. Then, the flow proceeds to step S405.

In step S405, the camera microcomputer 201 determines whether the camera FP drive button 212 has been pressed. In a case where it is determined that the camera FP drive button 212 has been pressed, the flow proceeds to step S406. On the other hand, in a case where it is determined that the camera FP drive button 212 has not been pressed, the flow proceeds to step S407.

In step S406, the camera microcomputer 201 requests the lens microcomputer 101 to drive the focus lens 109 via the camera communication unit 202 based on the camera FP setting, such as the camera FP position or the camera FP speed, and the flow proceeds to step S407.

In step S407, the camera microcomputer 201 determines whether or not to continue the regular processing of the camera FP function. In a case where it is determined that the regular processing of the camera FP function is to be continued, the flow returns to step S403. At this time, in a case where the camera microcomputer 201 determines that it is to transition to a sleep state, for example, because the power switch (not illustrated) of the camera body 200 has been turned off or the camera body 200 has not been operated for a certain period of time, the flow ends the regular processing of the camera FP function. Thus, the flow proceeds to step S408, and this flow ends. In a case where this flow ends and the camera FP position was set in step S404, the camera FP position may be stored in the nonvolatile memory so that the set camera FP position is initialized when the camera microcomputer 201 is started next time. Alternatively, the camera FP position may be stored in the nonvolatile memory when the camera FP position is set in step S404.

Referring now to FIG. 5, a description will be given of the operation of the initial setting of the camera FP function of the camera body 200 according to this example. FIG. 5 explains the initial setting of the camera FP function. FIG. 5 illustrates that the focus lens 109 in the interchangeable lens 100 can move in a range from a movable end on an infinity side (inf 301) to a movable end on a close distance side (near 302). FIG. 5 also illustrates that the camera FP position 501 is initially set to inf 301 in steps S400 to S402 in FIG. 4. The current position of the focus lens 109 is assumed to be at the current position 502. Here, in a case where the user presses the camera FP drive button 212 without pressing the camera FP registration button 211, the processing of step S406 starts. Thereby, the focus lens 109 moves to the camera FP position 501, that is, to the initial setting of inf 301 (503).

### INITIAL SETTING OF FP POSITION

FIG. 6 is a table illustrating combinations of initial settings of each FP position according to whether or not the camera body 200 and the interchangeable lens 100 are equipped with FP functions in the imaging system 10 according to this example, in which both the camera body 200 and the interchangeable lens 100 can be equipped with the FP functions.

In a case where neither the camera body 200 nor the interchangeable lens 100 has an FP function, the user cannot use the FP function, and therefore there is no initial setting (60). In a case where only the interchangeable lens 100 has an FP function, the lens FP position is initially set to the infinity end (61). In a case where only the camera body 200 has an FP function, the camera FP position is initially set to the infinity end (62).

On the other hand, in a case where both the camera body 200 and the interchangeable lens 100 have FP functions, the lens FP position is initially set to the infinity end, and the camera FP position is initially set to the close distance end (63). Thus, in the imaging system 10 according to this example, the lens initial FP position and the camera initial FP position are different from each other.

In this example, in a case where the camera microcomputer 201 determines that the interchangeable lens 100 has an FP function based on the lens FP installation information, it resets the camera FP position to the close distance end. Thereby, the lens initial FP position and the camera initial FP are set to different positions (step S402 in FIG. 4). However, the processing of setting each initial FP position to a different position is not limited to this example. For example, in a case where it is determined that the interchangeable lens 100 has an FP function based on the lens FP installation information, the camera microcomputer 201 may reset the camera FP position to the infinity end. Alternatively, the camera microcomputer 201 may set the camera initial FP position to a position different from the lens initial FP position included in the lens FP installation information. For example, in a case where the data stored in the nonvolatile memory is initially set as the camera FP setting in step S400, the camera FP setting does not need to be reset even if the interchangeable lens 100 has an FP function.

The camera FP setting is stored in a memory (not illustrated) of the camera body 200 by the camera microcomputer 201. In a case where the memory is a nonvolatile memory and is configured to retain the memory even after the power to the camera body 200 is cut off, the data stored in the nonvolatile memory may be initially set as the camera FP setting in this step. After the initializing processing of this step is completed, the flow proceeds to step S401 to start regular processing of the camera FP function.

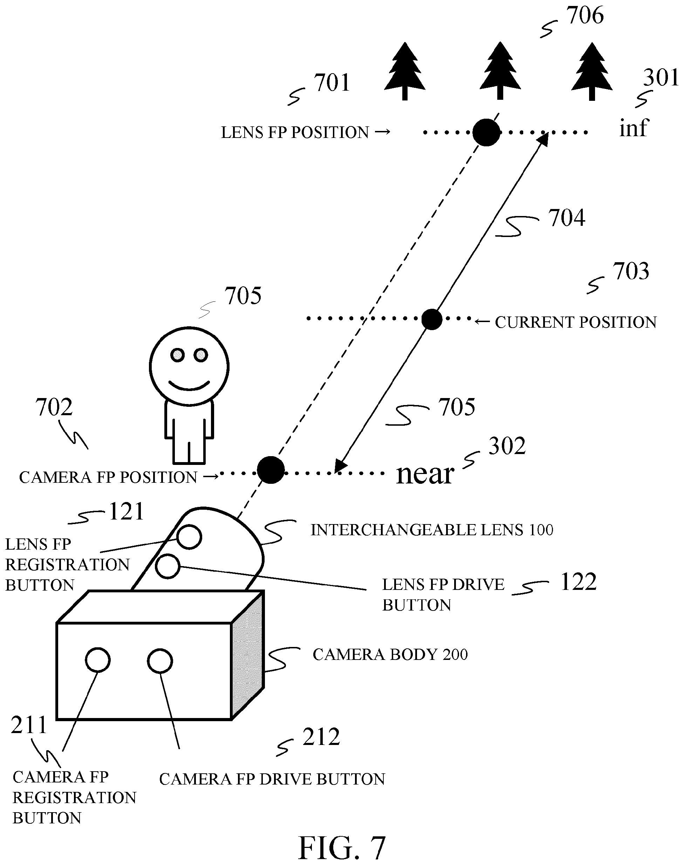

Referring now to FIG. 7, a description will be given of the operation of the initial setting when both the interchangeable lens 100 and the camera body 200 in this example have FP functions. FIG. 7 explains the initial setting in a case where the imaging system 10 has both the lens FP function and the camera FP function.

FIG. 7 illustrates that the focus lens 109 of the interchangeable lens 100 can move within a range from a moving end on an infinity side (inf 301) to a moving end on a close distance side (near 302). FIG. 7 also illustrates that the lens FP position 701 is initially set to inf 301 and the camera FP position 702 is initially set to near 302 by the processing described with reference to steps S200 and S400 to S402, and FIG. 6. The current position of the focus lens 109 is assumed to be at current position 703.

In a case where the user presses the lens FP drive button 122 without pressing the lens FP registration button 121, the processing of step S204 starts, and the focus lens 109 moves to the lens FP position 701, *i.e.,* to inf 301, which is the initial setting (704). In a case where the user presses the camera FP drive button 212 without pressing the camera FP registration button 211, the processing of step S406 starts. Thereby, the focus lens 109 moves to the camera FP position 702, *i.e.,* to near 302, which is the initial setting (705).

Due to the above initial setting operation, the user can use the lens FP function in an attempt to focus on the object 706 on the infinity side, and the camera FP function in an attempt to focus on the object 705 on the close distance side. Thereby, the user can instantly switch focus to a desired object.

### FP FUNCTION SEQUENCE

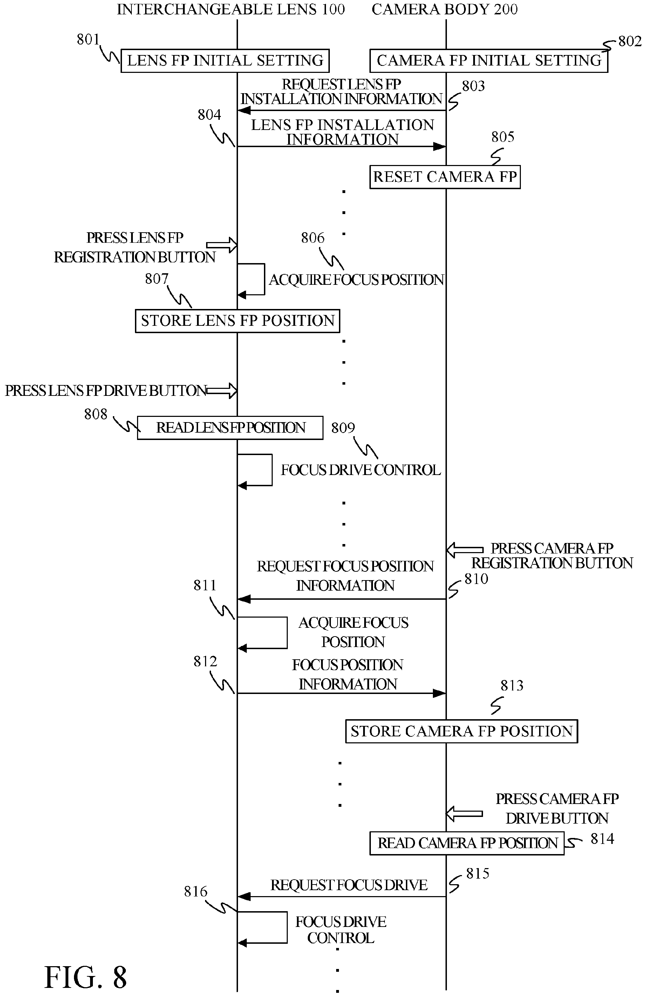

Referring now to FIG. 8, a description will be given of the processing of the FP function of the interchangeable lens 100 and the camera body 200 in the imaging system 10 according to this example. FIG. 8 explains the sequence of the FP function of the imaging system 10. In the sequence of FIG. 8, the interchangeable lens 100 is controlled by the lens microcomputer 101, and the camera body 200 is controlled by the camera microcomputer 201. A description of the processing already described with reference to FIGs. 2 and 4 will be omitted.

Processing 801 to processing 805 are initializing processing of the FP function of the imaging system 10 according to this example. Processing 801 corresponds to step S200, processing 802 corresponds to step S400, processing 803 and processing 804 correspond to step S401, and processing 805 corresponds to step S402 and the processing described with reference to FIG. 6. Processing 803 indicates that the camera microcomputer 201 transmits a transmission request command of the lens FP installation information to the lens microcomputer 101 via the camera communication unit 202. Processing 804 indicates that the lens microcomputer 101 transmits lens FP installation information to the camera microcomputer 201 via the lens communication unit 102 according to the reception of the transmission request command of the lens FP installation information via the lens communication unit 102.

Processing 806 and processing 807 are FP registration processing of the lens FP function, which is started by pressing the lens FP registration button 121 of the imaging system 10, and corresponds to step S202. Processing 808 and processing 809 are FP driving processing of the lens FP function, which is started by pressing the lens FP drive button 122 of the imaging system 10, and corresponds to step S204.

Processing 810 to processing 813 are FP registration processing of the camera FP function, which is started by pressing the camera FP registration button 211 of the imaging system 10, and corresponds to step S404. Processing 810 indicates that the camera microcomputer 201 transmits a transmission request command of focus position information to the lens microcomputer 101 via the camera communication unit 202 in order to obtain the current focus lens position of the focus lens 109 to be FP registered. Processing 811 indicates that the lens microcomputer 101 acquires the current focus lens position via the control circuit 108 according to the reception of the transmission request command of focus position information via the lens communication unit 102. Processing 812 indicates that the lens microcomputer 101 transmits the acquired focus lens position to the camera microcomputer 201 via the lens communication unit 102.

Processing 814 to processing 816 are FP drive processing of the camera FP function, which is started by pressing the camera FP drive button 212 of the imaging system 10, and corresponds to step S406. Processing 815 indicates that the camera microcomputer 201 transmits a focus drive request command to the lens microcomputer 101 via the camera communication unit 202 in order to move the focus lens 109 to the camera FP position based on the camera FP setting. At this time, in a case where the focus lens 109 is being driven, a focus drive stop request command may be executed before the focus drive request command in order to increase the stopping accuracy of the FP drive. Thereafter, processing 816 indicates that the lens microcomputer 101 controls the drive of the focus lens 109 via the control circuit 108 according to the reception of the focus drive request command via the lens communication unit 102.

This example can provide an imaging system in which both the image pickup apparatus and the accessory apparatus can have FP functions and a proper initial FP position is set for each FP function according to the combination of the image pickup apparatus and the accessory apparatus. Thereby, the user can avoid the arduousness of the FP setting change and reduce the possibility of missing an imaging opportunity.

### EXAMPLE 2

Example 2 according to the present disclosure relates to an imaging system in which both the image pickup apparatus and the accessory apparatus can have FP functions, and the imaging system changes the initial FP speed setting of each of the image pickup apparatus and the accessory apparatus according to the combination of the image pickup apparatus and the accessory apparatus. This example is different from Example 1 in that the initial FP speed is changed. Other configurations and processing of this example are similar to those of Example 1, so a description thereof will be omitted.

The setting of each FP speed may be changeable based on a user operation during regular processing of each FP function. The method of changing the setting of the FP speed is not limited and, for example, the camera FP speed may be changed by selecting a camera menu using the camera operation unit 210 or by inputting a numerical value. For example, the lens FP speed may be changed according to the operation of the lens operation unit 120. The value that can be set to each FP speed may be either the drive speed ([pps]) or the drive time to the FP position ([s]). In a case where the drive time to the FP position is used for the setting, the drive control of the focus lens 109 is performed based on the drive speed calculated based on the distance to the FP position from the current position and the drive time just before the FP drive starts.

### INITIAL SETTING OF FP SPEED

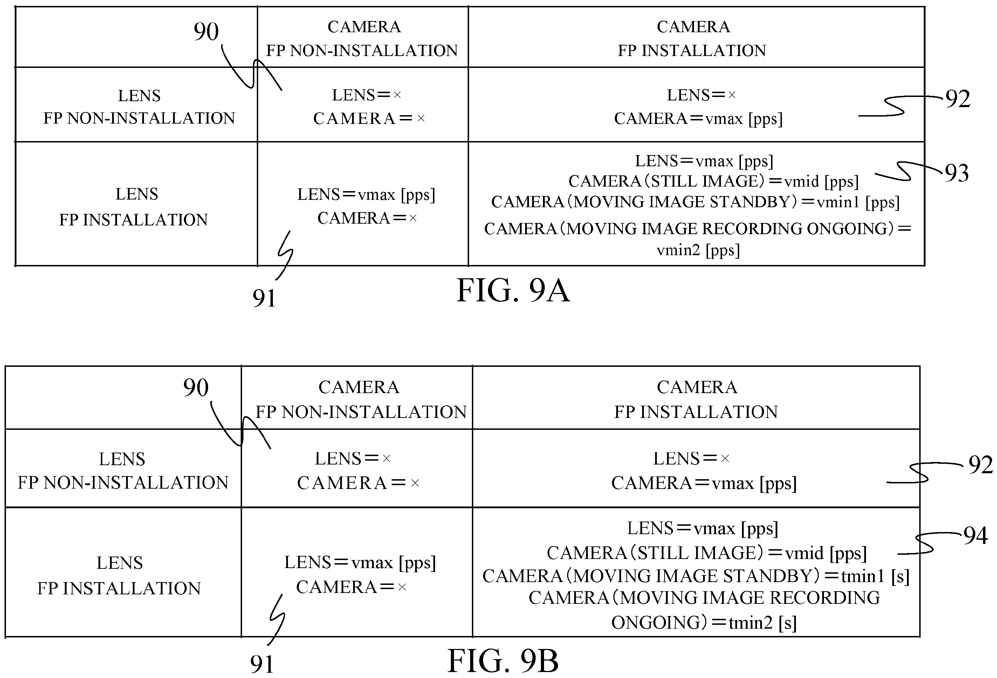

FIG. 9A is a table illustrating an example of a combination of initial settings of each FP speed depending on whether the camera body (image pickup apparatus) 200 and the interchangeable lens (accessory apparatus) 100 have FP functions in the imaging system according to this example.

In a case where neither the camera body 200 nor the interchangeable lens 100 has an FP function (90), the user cannot use the FP function, so there is no initial setting. In a case where only the interchangeable lens 100 has an FP function (91), the lens FP speed is set to vmax ([pps]). Similarly, when only the camera body 200 has an FP function (92), the camera FP speed is initially set to vmax ([pps]).

On the other hand, in a case where both the camera body 200 and the interchangeable lens 100 have FP functions (93), the camera FP speed differs for each operation mode (still image capturing mode, moving image standby mode, moving image recording mode). In this case, the camera initial FP speed vmid ([pps]) in the still image capturing mode is set to a speed equal to or lower than the lens FP speed vmax. The camera initial FP speed vmin1 ([pps]) in the moving image standby mode is set to vmid or lower. The camera initial FP speed vmin2 ([pps]) in the moving image recording mode (moving image recording ongoing) is set to vmin1 or lower.

In other words, the FP speeds are in the relationship (vmax) ≥ (vmid) ≥ (vmin1) ≥ (vmin2). At this time, vmax is mainly used for a still image capturing application, and may be set to the maximum speed at which the focus lens 109 can be driven, based on the responsiveness. Also, vmin1 and vmin2, which are used for a moving image capturing application, may be set to speeds that have little influence on the moving image quality, based on the driving noise level and angle of view fluctuation amount of the focus lens 109. In the moving image capturing mode, the drive speed sent in the focus drive request command by FP drive may be determined based on focus information generated by the signal processing circuit 205 so as to be equal to or lower than the set FP speed (vmid, vmin1, vmin2).

FIG. 9B is a table illustrating an example of a combination of the initial settings of each FP speed in this example, different from that in FIG. 9A. Reference numerals 90, 91, and 92 are the same as those of FIG. 9A, and thus a description thereof will be omitted.

In a case where both the camera body 200 and the interchangeable lens 100 have FP functions (94), the camera FP speed has a different initial setting for each operation mode (still image capturing mode, moving image standby mode, moving image recording mode). The camera initial FP speed vmid ([pps]) in the still image capturing mode is similar to as that in FIG. 9A in that the lens FP speed is set to a speed equal to or lower than vmax. At this time, the camera initial FP speed in the moving image standby mode is set to tmin1 ([s]) as the drive time to the FP position. The camera initial FP in the moving image recording mode is tmin2 ([s]) as the drive time to the FP position, and is set to tmin1 or more.

Thus, in the moving image capturing mode, by controlling the speed based on the drive time, the user can easily perform an imaging technique called focus-in and focus-out, in which the focus is moved from the current position to the FP position. Therefore, tmin1 and tmin2 may be set in a range of about 1 to 5 seconds.

By initially setting each FP speed as illustrated in FIGs. 9A and 9B, in a case where only the interchangeable lens 100 or the camera body 200 has the FP function, the FP speed is initially set to one that prioritizes responsiveness. On the other hand, in a case where both the camera body 200 and the interchangeable lens 100 have FP functions, the FP speed is initially set to one that prioritizes responsiveness and moving image quality. This example can provide an imaging system that enables the user to instantly use both FP functions depending on the imaging situation.

The method of initially setting each FP speed in this example is not limited. For example, the camera FP speed may be initially set to be equal to or higher than the lens FP speed. For example, the FP speed may be set based on a focus change amount (moving amount of the image plane) or based on a change amount in an angle of view (actual focal length change amount, breathing amount). For example, the FP speed during FP drive does not need to be constant, and for example, the acceleration/deceleration control may be performed during FP drive, or an acceleration/deceleration amount may be initially set as the FP speed setting.

In a case where each initial FP speed is initially set to a different speed as in this example, each initial FP position may be made the same without performing Example 1. Similarly, in a case where each initial FP position is initially set to a different position as in Example 1, each initial FP speeds may be made the same without performing Example 2.

This example can provide an imaging system in which both the image pickup apparatus and the accessory apparatus can have FP functions, and an initial FP speed suitable for each FP function is set according to a combination of the image pickup apparatus and the accessory apparatus. Thereby, the user can avoid the arduousness of the FP setting change and reduce the possibility of missing an imaging opportunity.

As a variation of each example, the camera body 200 and the interchangeable lens 100 may be connected via an intermediate adapter as an accessory apparatus that can be attached to the camera body 200. The intermediate adapter may also have an FP function. At this time, the camera microcomputer 201 acquires FP installation information of the intermediate adapter via the camera communication unit 202 and performs initial settings of the camera FP function. That is, one or more accessory apparatuses (at least one accessory apparatus) is detachably connected to the camera body 200.

As a variation of each example, the lens microcomputer 101 may receive information (camera FP installation information) on the camera FP function installed in the camera body 200 via the lens communication unit 102, and change the initial settings of the lens FP function based on the camera FP installation information. In that case, for example, in processing 803, the camera microcomputer 201 may transmit the camera FP installation information to the lens microcomputer 101 via the camera communication unit 202, and the lens microcomputer 101 that has received the camera FP installation information may reset the lens FP setting.

In the description of each example, "first" and "second" in "first function" and "second function," "first initial setting information," "second initial setting information," "first initial position information," "second initial position information," "first initial speed information," and "second initial speed information," etc., can be interchanged as appropriate.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that some embodiments are not limited to the disclosed embodiments. The scope of the following claims is to be accorded the broadest interpretation so as to encompass all such modifications and equivalent structures and functions.

Each example can provide an image pickup apparatus that is used for an imaging system in which both the image pickup apparatus and the accessory apparatus can have FP functions, and can properly perform the initial setting of the FP function.

## Claims

1. An image pickup apparatus (200) attachable to and detachable from at least one accessory apparatus (100), the image pickup apparatus comprising:
a camera communication unit (202) communicable with the accessory apparatus; and
a camera control unit (201) configured to:
receive from the accessory apparatus via the camera communication unit, first initial setting information on an initial setting of a first function for driving a focus lens to a first focus position that has been previously set, a camera communication unit having a second function for requesting the accessory apparatus to drive the focus lens to a second focus position that has been previously set, and
set second initial setting information on an initial setting of the second function based on the first initial setting information so that the second initial setting information is at least partially different from the first initial setting information.

2. The image pickup apparatus according to claim 1, **characterized in that** the first initial setting information includes information on whether or not the accessory apparatus has the first function,
wherein the second initial setting information includes second initial position information on an initial setting of the second focus position, and
wherein the camera control unit is configured to set the second initial position information to information indicating an infinity end in a case where the accessory apparatus does not have the first function.

3. The image pickup apparatus according to claim 1 or 2, **characterized in that** the first initial setting information includes information on whether or not the accessory apparatus has the first function,
wherein the second initial setting information includes second initial position information on an initial setting of the second focus position, and
wherein the camera control unit is configured to set the second initial position information to information indicating a close distance end in a case where the accessory apparatus has the first function.

4. The image pickup apparatus according to any one of claims 1 to 3, **characterized in that** the first initial setting information includes first initial position information on an initial setting of the first focus position,
wherein the second initial setting information includes second initial position information on an initial position of the second focus position, and
wherein the camera control unit is configured to set the second initial position information to be different from the first initial position information.

5. The image pickup apparatus according to claim 4, **characterized in that** the camera control unit is configured to set the second initial position information to information indicating one of a close distance end and an infinity end in a case where the first initial position information is information indicating another of the close distance and the infinity end.

6. The image pickup apparatus according to any one of claims 1 to 5, **characterized in that** the first initial setting information includes first initial speed information on an initial setting of a focus drive speed of the first function,
wherein the second initial setting information includes second initial speed information on an initial setting of a focus drive speed of the second function.

7. The image pickup apparatus according to claim 6, **characterized in that** the camera control unit is configured to:
set the second initial speed information corresponding to each of a moving image capturing mode and a still image capturing mode, and
set the second initial speed information in the moving image capturing mode to be equal to or lower than the second initial speed information in the still image capturing mode.

8. The image pickup apparatus according to claim 6, **characterized in that** the camera control unit is configured to:
set the second initial speed information corresponding to each of a moving image standby mode and a moving image recording mode, and
set the second initial speed information in the moving image recording mode to be equal to or lower than the second initial speed information in the moving image standby mode.

9. An accessory apparatus (100) attachable to and detachable from the image pickup apparatus, the accessory apparatus comprising:
an accessory communication unit (102) communicable with the image pickup apparatus; and
an accessory control unit (101) having a first function for driving a focus lens to a first focus position that has been previously set,
**characterized in that** the accessory communication unit is configured to transmit first initial setting information on an initial setting of the first function to the image pickup apparatus.

10. The accessory apparatus according to claim 9, **characterized in that** the first initial setting information includes at least one of information on whether or not the accessory apparatus has the first function, first initial position information on an initial setting of the first focus position and first initial speed information on an initial setting of a focus drive speed of the first function.

11. The accessory apparatus according to claim 10, **characterized in that** the first initial position information is information indicating an infinity end or information indicating a close distance end.

12. The accessory apparatus according to claim 10, **characterized in that** the first initial speed information is information indicating a maximum speed of the focus drive speed.

13. The accessory apparatus according to any one of claims 9 to 12,
**characterized in that** the accessory control unit (101) configured to receive, from the image pickup apparatus via the accessory communication unit, second initial setting information on an initial setting of a second function of driving the focus lens to a second focus position that has been previously set, and
the accessory control unit is configured to set first initial setting information on an initial setting of the first function based on the second initial setting information so that the first initial setting information is at least partially different from the second initial setting information.

14. The accessory apparatus according to claim 13, **characterized in that** the second initial setting information includes information on whether the image pickup apparatus has the second function,
wherein the first initial setting information includes first initial position information on an initial setting of the first focus position, and
wherein the accessory control unit is configured to set the first initial position information to information indicating an infinity end in a case where the image pickup apparatus does not have the second function.

15. The accessory apparatus according to claim 13 or 14, **characterized in that** the first initial setting information includes first initial position information that is an initial setting of the first focus position,
wherein the second initial setting information includes information on whether or not the image pickup apparatus has the second function, and
wherein the accessory control unit is configured to set the first initial position information to information indicating a close distance end in a case where the image pickup apparatus does not have the second function.

16. The accessory apparatus according to any one of claims 13 to 15, **characterized in that** the first initial setting information includes first initial position information on an initial setting of the first focus position,
wherein the second initial setting information includes second initial position information on an initial setting of the second focus position, and
wherein the accessory control unit is configured to set the first initial position information so that the first initial position information is different from the second initial position information.

17. The accessory apparatus according to claim 16, **characterized in that** the accessory control unit is configured to set the first initial position information to information indicating one of a close distance end and an infinity end in a case where the second initial position information is information indicating another of the close distance end and the infinity end,
wherein the accessory control unit is configured to set the first initial position information according to a user operation of the operation unit.

18. The accessory apparatus according to any one of claims 13 to 17, **characterized in that** the first initial setting information includes first initial speed information on an initial setting of a focus drive speed of the first function,
wherein the second initial setting information includes second initial speed information on an initial setting of a focus drive speed of the second function, and
wherein the accessory control unit is configured to set the first initial speed information to be equal to or lower than the second initial speed information.

19. The accessory apparatus according to any one of claims 13 to 18, **characterized in that** the first initial setting information includes first initial speed information on an initial setting of a focus drive speed of the first function,
wherein the second initial setting information includes second initial speed information on an initial setting of a focus drive speed of the second function, and
wherein the accessory control unit is configured to set the first initial speed information to be equal to or higher than the second initial speed information.

20. The accessory apparatus according to any one of claims 13 to 19, **characterized in that** the accessory control unit is configured to:
receive from the image pickup apparatus information indicating whether or not the image pickup apparatus is in a still image capturing mode or a moving image capturing mode,
set the first initial speed information corresponding to each of the moving image capturing mode and the still image capturing mode, and
set the first initial speed information in the moving image capturing mode to be equal to or lower than the first initial speed information in the still image capturing mode.

21. The accessory apparatus according to any one of claims 13 to 20, **characterized in that** the accessory control unit is configured to:
receive from the image pickup apparatus information indicating whether a moving image capturing mode is a moving image standby mode or a moving image recording mode, and
set the first initial speed information corresponding to each of the moving image standby mode and the moving image recording mode, and
set the first initial speed information in the moving image recording mode to be equal to or lower than the first initial speed information in the moving image standby mode.

22. A control method of an image pickup apparatus (200) attachable to and detachable from at least one accessory apparatus (100), the control method comprising:
a receiving step of receiving, from the accessory apparatus via a camera communication unit (202) communicable with the accessory apparatus, first initial setting information on an initial setting of a first function for driving a focus lens to a first focus position that has been previously set; and
a requesting step of requesting via the camera communication unit the accessory apparatus to drive the focus lens to a second focus position that has been previously set, using a second function,
**characterized in that** the requesting step sets second initial setting information on an initial setting of the second function based on the first initial setting information so that the second initial setting information is at least partially different from the first initial setting information.

23. A control method of an accessory apparatus (100) attachable to and detachable from an image pickup apparatus (200), the control method comprising the steps of:
transmitting first initial setting information on an initial setting of a first function to the image pickup apparatus; and
driving a focus lens to a first focus position that has been previously set, using the first function.

24. A program that causes a computer to execute the control method according to claim 22 or 23.
